# EUROPEAN PATENT SPECIFICATION

(11) **EP 1 276 594 B1**
(45) Date of publication and mention of the grant of the patent: **25.01.2006**
(21) Application number: 00957773.5
(22) Date of filing: 24.08.2000
(51) Int. Cl.: B24D 7/16, B29C 65/06, C09J 5/06

(54) **METHOD FOR ATTACHING A FASTENER TO A SURFACE TREATING MEMBER, AND SUCH AN ARTICLE HAVING A FASTENER**
VERFAHREN ZUM ANBRINGEN EINES BEFESTIGUNGSELEMENTS AUF EINEM OBERFLÄCHENBEHANDELUNGSGEGENSTAND UND DAMIT HERGESTELLTER GEGENSTAND
PROCEDE DE FIXATION D'UNE ATTACHE A UN ELEMENT DE TRAITEMENT DE SURFACE ET ARTICLE DOTE DE LADITE ATTACHE

(30) Priority: 18.04.2000 US 551477
(43) Date of publication of application: 22.01.2003
(73) Proprietor: 3M Innovative Properties Company, St. Paul, MN 55133-3427 (US)
(72) Inventor: FRITZ, Peter, J., Saint Paul, MN 55133-3427 (US); CONWELL, Stanley, L., Saint Paul, MN 55133-3427 (US)
(74) Representative: Vossius & Partner
(86) International application number: PCT/US2000/023258
(87) International publication number: WO 2001/078946

(56) References cited:
- DE-A- 4 442 978
- DE-C- 4 210 066
- DE-U- 29 703 898
- US-A- 3 136 100
- US-A- 3 851 357
- US-A- 4 141 181
- US-A- 4 778 702
- US-A- 5 298 098
- US-A- 5 593 120
- US-A- 5 931 729
- PATENT ABSTRACTS OF JAPAN vol. 1996, no. 07, 31 July 1996 (1996-07-31) -& JP 08 057958 A (NIFCO INC), 5 March 1996 (1996-03-05)
- PATENT ABSTRACTS OF JAPAN vol. 1997, no. 03, 31 March 1997 (1997-03-31) -& JP 08 300486 A (NIFCO INC), 19 November 1996 (1996-11-19)

## Description

### TECHNICAL FIELD

The present invention relates generally to a method of attaching a fastener to a surface conditioning member and such surface treating article, and more particularly to a method of inducing relative rotation between a fastener and a surface conditioning member with a layer of adhesive between the fastener and an abrasive article and such an abrasive article.

### BACKGROUND OF THE INVENTION

Various articles and methods for attaching thermoplastic fasteners to articles are known in the art. For example, U.S. Patent No. 4,636,124 to Gugle et al. discloses a one-piece thermoplastic fastener assembly having a friction-weld fastening surface with a centrally located heat-activated adhesive pellet. A plurality of deflector segments are integrally formed with the friction-weld surface at the plurality of radial distances from the axis of rotation. In one embodiment, the deflector segments are shown in a continuous spiral rib, which extends between the central portion of the friction weld surface to a point adjacent to its periphery. The spiral rib prevents the heat-activated adhesive from being driven away from the base and provides a means for uniformly distributing the heat activated adhesive across the surface of the friction weld surface.

U.S. Patent No. 4,551,189 to Peterson discloses a friction welding fastener system for fusing a thermoplastic material fastener to a substrate by heat of friction induced through the application of rotative and axial forces applied to the fastener. A cavity is formed inwardly of the bottom surface of the thermoplastic base member and a heat activated adhesive material having a bonding affinity for both the base material and the substrate material is inserted into the cavity to form a layer having a thickness equal or greater than the thickness of the base member. The base member is rotated with sufficient rotative and axial forces to cause the heat activated adhesive layer to adhere to the substrate.

European Patent Application 0 937 544 A2 to Smith discloses a method of producing an abrasive treatment disc, whereby the disc is formed from an abrasive material ultrasonically welded to a mounting member.

U.S. Patent No. 5,931,729 to Penttila et al, discloses a method of spin welding a fastener to an article and such an article. The fastener is melt-bonded to the back of the surface conditioning disc. The surface treating article comprises a working surface adapted to treat a workpiece surface, and a back surface, the back surface comprising an open woven scrim. In a preferred embodiment, the surface treating article has a nonwoven abrasive surface conditioning disc. The Penttila et al. reference states it is also possible for the surface treating article to be a coated abrasive disc, a polishing pad, a brush, or a similar surface treating element.

Surface conditioning discs having a threaded male button bonded to the back side of the disc by an adhesive are available commercially as Roloc™ surface conditioning discs from Minnesota Mining and Manufacturing Company, St. Paul, Minnesota. These surface conditioning discs have an abrasive member and a fastener attached to the abrasive member by a layer of thermosetting adhesive. The fastener has a base and a threaded portion for attaching to a suitable back-up pad. These surface conditioning discs are assembled by first loading the fastener into heated fixture (typically 200-260° C), such that the threaded portion of the fastener is held by the heated fixture and the base is exposed. The heated fixture heats the fastener. Next, a layer of thermosetting adhesive is applied to the fastener base, typically by spraying. After spraying the thermosetting adhesive, an abrasive member is centered relative to the fastener held by the heated fixture and then makes contact with the layer of thermosetting adhesive on the fastener. The abrasive member and fastener are held in a compressive force until the layer of thermosetting adhesive has cured. Then, the surface conditioning disc is removed from the heated fixture.

### SUMMARY OF THE INVENTION

One aspect of the present invention provides a surface treating article. The surface treating article comprises: a) a surface conditioning member; b) a fastener including a generally planar surface and a drive member; and c) a layer of adhesive between the surface conditioning member and the planar surface of the fastener, where the layer of adhesive includes rotational orientation.

Preferably, the planar surface includes a center portion and an outer portion adjacent the center portion, where the layer of adhesive is bonded more firmly to the surface conditioning member adjacent the outer portion of the planar surface of the fastener than the layer of adhesive adjacent the center portion of the planar surface of the fastener.

In one preferred embodiment of the above surface treating article, the surface conditioning member includes a working surface and a back surface opposite the working surface, where the layer of adhesive is between the back surface of the surface conditioning member and the planar surface of the fastener. In another aspect of this embodiment, the layer of adhesive is coated on substantially all of the back surface of the surface conditioning member.

In another preferred embodiment of the above surface treating article, the surface conditioning member is an abrasive member. In another aspect of this embodiment, the working surface comprises a non-woven abrasive. In yet another aspect of this embodiment, the working surface comprises a coated abrasive.

In another preferred embodiment of the above surface treating article, the fastener comprises a thermoplastic material. In another aspect of this embodiment, the fastener comprises nylon. In another preferred embodiment of the above surface treating article, the fastener comprises metal. In another aspect of this embodiment, the fastener comprises steel.

In another preferred embodiment of the above surface treating article, the layer of adhesive comprises a thermoplastic adhesive. In another aspect of this embodiment, the layer of thermoplastic adhesive was heated by inducing relative rotation between the fastener and the surface conditioning member with the layer of thermoplastic adhesive between the planar surface of the fastener and the surface conditioning member. In another aspect of this embodiment, the layer of adhesive comprises a thermosettable thermoplastic adhesive.

In another preferred embodiment of the above surface treating article, the fastener includes a generally planar base and a drive member, where the planar base includes the planar surface and a second surface opposite the planar surface, and where the drive member extends from the second surface of the planar base. In another aspect of this embodiment, the planar base allows the adhesive to flow freely between the back surface of the surface conditioning member and the planar base, where the adhesive is in a softened state.

Another aspect of the present invention provides a method for attaching a fastener; to a surface conditioning member. The method for attaching a fastener to a surface conditioning member comprises the steps of: a) inducing relative rotation between a fastener and a surface conditioning member with a layer of thermoplastic adhesive in contact with a planar surface of the fastener and the surface conditioning member so-as to soften the layer of adhesive to form a bond between the fastener and the surface conditioning member; and b) thereafter stopping the relative rotation between the fastener and the surface treating member.

In one preferred embodiment of the above method, the layer of adhesive comprises a sheet of adhesive. In another aspect of this embodiment, the sheet of adhesive comprises a disc of adhesive. In another preferred embodiment of the above method, the layer of adhesive comprises an annulus of adhesive.

In one preferred embodiment of the above method, the surface conditioning member includes a working surface and a back surface opposite the working surface, where step a) includes inducing relative rotation between the fastener and the surface conditioning member with the layer of adhesive in contact with the planar surface of the fastener and the back surface of the surface conditioning member. In another aspect of this embodiment, the surface conditioning member comprises an abrasive member. In yet another aspect of this embodiment, the method further includes the step of coating the layer of adhesive on the back surface of the surface conditioning article prior to step a). In another aspect of this embodiment, the method further includes the step of coating substantially all of the back surface of the surface conditioning article with the layer of adhesive prior to step a). In yet another aspect of this embodiment, the working surface comprises a coated abrasive. In another aspect of this embodiment, the working surface comprises a non-woven surface.

In another preferred embodiment of the above method, the fastener comprises a thermoplastic material. In another aspect of this embodiment, the fastener comprises nylon. In another preferred embodiment of the above method, the fastener comprises metal. In another aspect of this embodiment, the fastener comprises steel.

In yet another preferred embodiment of the above method, the layer of adhesive comprises a thermoplastic adhesive. In another aspect of this embodiment, the layer of thermoplastic adhesive comprises a thermosettable thermoplastic adhesive.

In another preferred embodiment of the above method, the fastener includes a generally planar base and a drive member, where the planar base includes the planar surface and a second surface opposite the planar surface, and where the drive member extends from the second surface of the planar base.

In another preferred embodiment of the above method, step a) comprises inducing a relative rotation of from 2,000 to 10,000 RPM. In another preferred embodiment of the above method, step a) comprises applying a compressive force of between 5 and 90 pounds between the fastener and the surface conditioning member. In another aspect of this embodiment, step a) causes the planar surface of the fastener to soften and bond with the surface conditioning member.

In another preferred embodiment of the above method, the method further includes the step of coating the layer of adhesive on the planar surface of the fastener prior to step a).

### BRIEF DESCRIPTION OF THE DRAWINGS

The present invention will be further explained with reference to the appended Figures, wherein like structure is referred to by like numerals throughout the several views, and wherein:
Figure 1 is a plan view of a preferred embodiment of a surface treating article according to the present invention;
Figure 2a is a cross-section of the surface treating article of Figure 1 taken along line 2a-2a;
Figure 2b is a cross-section of an alternative embodiment of the surface treating article of Figure 1 taken along line 2b-2b;
Figure 3 is a plan view of an alternative embodiment of a surface treating article according to the present invention;
Figure 4 is a cross-section of the surface treating article of Figure 3 taken along line 4-4;
Figure 5 is a partially schematic view of a preferred apparatus for carrying out the method of the present invention prior to contacting the fastener to the layer of adhesive, which is in contact with the surface conditioning member; and
Figure 6 is a view of a portion of the apparatus of Figure 5, illustrating the fastener in contact with the layer of adhesive, which is in contact with the surface conditioning member.

### DETAILED DESCRIPTION OF THE INVENTION

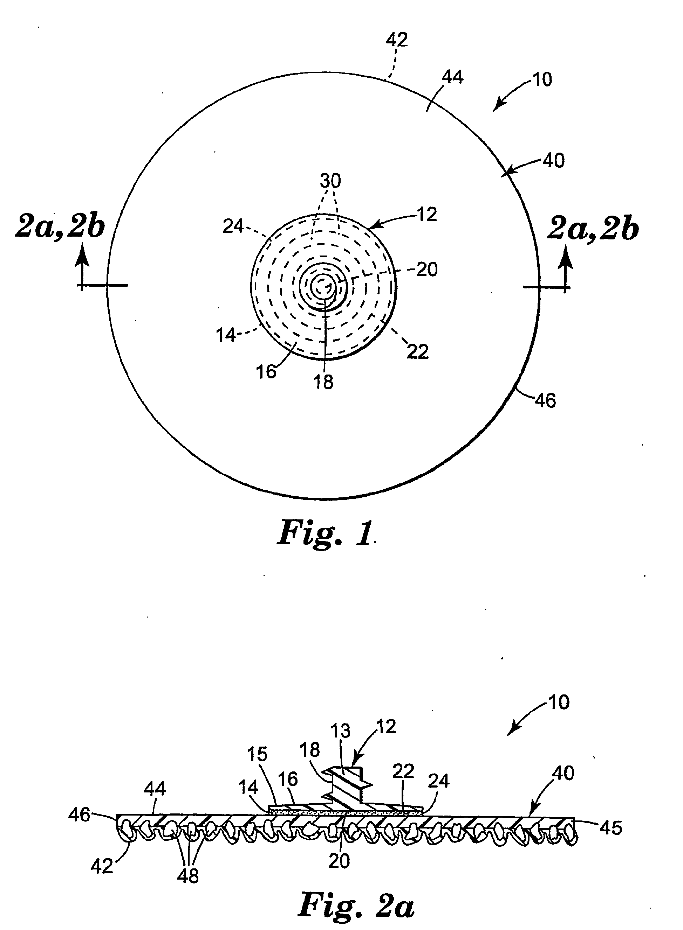

A preferred embodiment of a surface treating article 10 of the present invention is illustrated in Figure 1. The surface treating article 10 includes a surface conditioning member 40 and a fastener 12 attached by a layer of adhesive 24. To form the surface treating article 10, the fastener 12 and surface conditioning member 40 are rotated relative to one another with a layer of adhesive between them so as to soften the layer of adhesive to allow it to flow between the fastener 12 and surface conditioning member 40. Upon cooling, the layer of adhesive forms a bond between the fastener 12 and the surface conditioning member 40. The preferred spin welding method for softening the layer of adhesive between the fastener 12 and surface treating member 40 is described below.

The surface conditioning member 40 includes a working surface 42 and a back surface 44 opposite the working surface 42. The surface conditioning member 40 also includes a peripheral surface 46 extending between the working surface 42 and the back surface 44. As illustrated, the fastener 12 is attached to the back surface 44 of the surface conditioning member 40 by the layer of adhesive 24. Alternatively, the fastener 12 may be attached to the working surface 42 of the surface conditioning member 40 by the layer of adhesive 24.

Fastener 12 includes a generally planar base 15 and a drive member 18. The planar base 15 includes a generally planar surface 14. Prior to inducing relative rotation between the fastener 12 and the surface conditioning member 40, a layer of adhesive is placed between the planar surface 14 of fastener 12 and the back surface 44 of the surface conditioning member 40. Preferably, the layer of adhesive is a layer of thermoplastic adhesive. By inducing relative rotation between the fastener 12 and the surface conditioning member 40 with a layer of thermoplastic adhesive between, the friction causes the layer of thermoplastic adhesive to soften and flow in between the fastener 12 and surface conditioning member 40. Upon cooling, the layer of adhesive 24 forms a bond between the fastener 12 and surface conditioning member 40. In one preferred embodiment, the layer of adhesive is a discrete sheet of adhesive. The advantage of having a discrete sheet of adhesive is that it allows a sheet of adhesive to be placed on or off of the surface conditioning member 40 or repositioned on the surface conditioning member 40 prior to inducing relative rotation between the fastener 12 and the surface conditioning member 40. Preferably, such a sheet of adhesive is in the shape of a circle or a disc and corresponds generally to the shape of the planar surface 14 of fastener 12.
More preferably, the disc of adhesive has a diameter less than the diameter of the planar surface 14 so that the adhesive will not flow beyond the outer edge of the fastener 12. Preferably, the sheet of adhesive 24 has a uniform thickness to form a uniform layer of adhesive 24 between the fastener 12 and surface conditioning member 40. In one preferred embodiment, the layer of adhesive is 0.05 cm. to 0.3 cm thick before spin welding. In another preferred embodiment, the layer of adhesive is 0.15 cm thick before spin welding. Such discrete sheets of thermoplastic adhesive may be cut out of a long web of thermoplastic adhesive.

Due to the relative rotation between the fastener 12 and the surface conditioning member 40 for softening the adhesive, the layer of adhesive includes rotational orientation, which is schematically indicated by the reference number 30. This rotational orientation may be observed in different forms. As one example, the layer of adhesive 24 may include swirls in a rotational direction, indicating the fastener 12 was rotated relative to the surface conditioning member 40. As another example, depending on the composition of the back surface 44 of the surface conditioning member 40, some back surface material may become mixed into in the layer of adhesive 24 in a rotational direction. With the back surface material mixed in with the adhesive, both the adhesive and back surface material may be observed in the swirls in a rotational direction.

The fastener 12 includes a base 15 and a drive member 18. Base 15 includes a planar surface 14 and a second surface 16 opposite the planar surface 14. The planar surface 14 of the fastener 12 is preferably smooth and planar so as to provide sufficient surface area to achieve the frictional temperatures required to soften the layer of adhesive to allow it to flow. Also, the planar surface 14 of the fastener 12 is preferably smooth and planar to allow the layer of adhesive 24 to flow freely between the fastener 12 and the back surface 44 of the surface treating article 10 when the adhesive is heated and softened. However, the planar surface 14 of the fastener 12 may include a textured surface while still being planar. It is also preferred that the planar surface 14 of the fastener 12 is circular. The planar surface 14 includes a center portion 20 and an outer portion 22 outside the center portion 20. In one preferred embodiment, the planar surface 14 of the fastener 12 has a diameter of approximately 3 cm (1.2 in), although larger and smaller fasteners are within the scope of the invention. As illustrated, second surface 16 tapers toward the outer edge of the fastener 12. Extending from the center of the second surface 16 is drive member 18. A preferred fastener 12 is disclosed in U.S. Patent No. 3,562,968, "Surface Treating Tool," Johnson et al.

Drive member 18 is configured for attaching the surface treating article 10 to a desired power tool. In a preferred embodiment, the drive member 18 is a threaded stud which fits with a corresponding female threaded back-up pad (not illustrated). A suitable back-up pad is available commercially as a Roloc™ disc pad from Minnesota Mining and Manufacturing Company, St. Paul, Minnesota.

Figure 2a illustrates a cross-sectional view of the surface treating article 10 taken along line 2a-2a of Figure 1. The surface conditioning member 40 is an abrasive member 40. In the illustrated embodiment, the abrasive member 40 is a coated abrasive member 40. The back surface 44 includes a backing 45. A preferred backing is one that is thick enough and stiff enough to withstand the spin welding process. The working surface 42 of the abrasive member 40 includes an abrasive layer. The abrasive layer includes a multiplicity of abrasive particle 48 bonded to the backing by a make coat and optional size coat. Coated abrasive members and their method of manufacture are well known to those skilled in the art. One example of a coated abrasive member 40 is illustrated in U.S. Patent No. 5,766,277, "Coated Abrasive Article and Method of Making the Same," DeVoe et al.

In a preferred embodiment, the layer of adhesive 24 bonds more firmly between the outer portion 22 of the fastener 12 and the back surface 44 compared to the bond between the center portion 20 of the fastener 12 and the back surface 44. Because the linear speed caused by the rotation of the fastener 12 is greater at the outer diameter of the planar surface 14, the frictional temperatures at the outer diameter are greatest. Accordingly, the portion of the adhesive adjacent the outer portion 22 of the fastener 12 is heated more quickly than the portion of the adhesive adjacent the center portion 20. The portion adhesive 24 adjacent the outer portion 22, upon cooling, provides a strong bond between the fastener 12 and the abrasive article 40. At the center portion 20 of the planar surface 14, where rotation causes a smaller linear speed, the frictional heat is less. As a result, the layer of adhesive 24 adjacent the center portion 20 of the fastener 12 may not heat as much to provide as strong of a bond as the adhesive adjacent the outer portion 22 of the fastener 12. If the fastener 12 is made of a thermoplastic material and a portion of the planar surface 14 of the fastener 12 is in direct contact with the back surface 44 of the abrasive article 40, the thermoplastic material of the fastener may also soften during spin welding to melt bond the fastener 12 to the back surface 44 of the abrasive article 40. This may be achieved by providing a layer of adhesive 24 with a diameter less than the diameter of the planar surface 14 of the fastener 12, which allows a portion of the thermoplastic fastener to be in direct contact with the abrasive article 40.

Instead of placing a layer of adhesive or a discrete sheet of adhesive as a separate item between fastener 12 and the back surface 44 of the surface conditioning member 40, the back surface 44 may be coated with a layer of adhesive, prior to inducing relative rotation between the fastener 12 and the surface conditioning member 40. Preferably, the layer of adhesive is a thermoplastic adhesive. The layer of adhesive may have a smaller or larger diameter than the diameter of the fastener 12. For instance, substantially all of the back surface 44 may be coated with the layer of adhesive. Alternatively, a layer of adhesive may be coated on the planar surface 14 of the fastener 12, prior to inducing relative rotation between the fastener 12 and the surface conditioning member 40. By coating a layer of adhesive on the back surface 44 or on the planar surface 14 of the fastener 12, it is not necessary to center a discrete sheet of adhesive between the fastener 12 and the surface conditioning member prior to inducing relative rotation between the fastener 12 and the surface conditioning member 40.

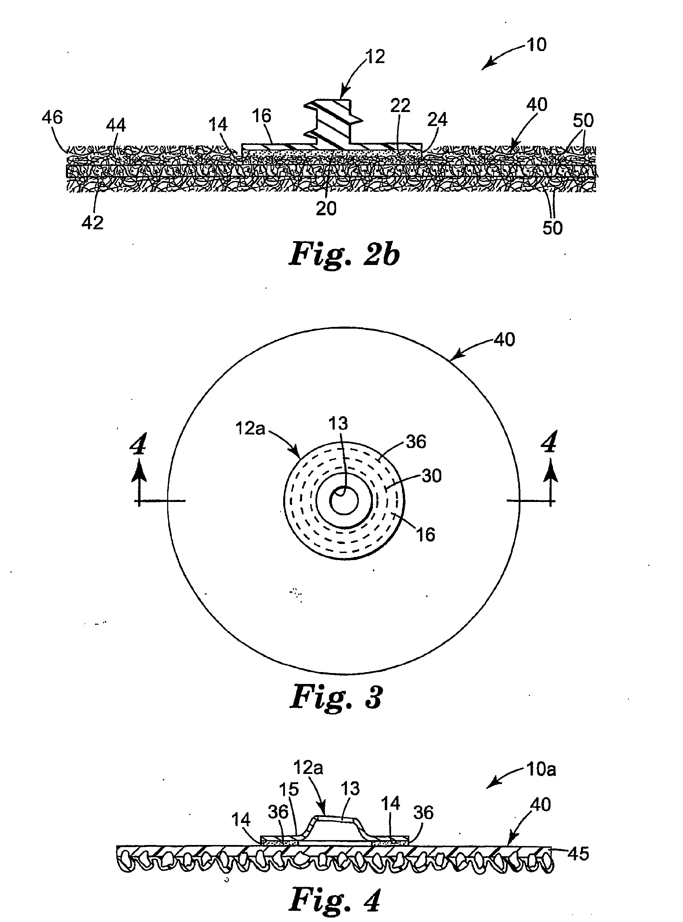

Figure 2b illustrates a cross-sectional view of an alternative surface treating article 10 taken along line 2b-2b in Figure 1. The surface conditioning member 40 is also an abrasive member, but specifically it is a non-woven abrasive member 40. The non-woven abrasive member 40 includes fibers 50 needle tacked into a woven scrim. The working surface 42 and back surface 44 include fibers 50. A preferred non-woven abrasive member is described in detail in U.S. Patent No. 3,688,453. As relative rotation is induced between the fastener 12 and the surface conditioning member 40, the layer of adhesive begins to soften and penetrate the spaces between the woven fibers 50, providing an additional mechanical bond between the fastener 12 and surface conditioning member 40. If the diameter of the layer of adhesive is less than the diameter of the planar surface 14 of the fastener 12, the material of the fibers may also soften during the relative rotation to melt bond with the fastener 12.

Figure 3 illustrates an alternative embodiment of the surface treating article 10a including an alternative fastener 12a. Surface treating article 10a is similar to surface treating article 10 of Figure 1, except that it includes an alternative fastener 12a and an annular layer of adhesive 36. The annular layer of adhesive 36 may be a discrete annular sheet of adhesive, which may be taken on or off the surface treating article 10a, or repositioned on the surface treating article 10a. Fastener 12a includes a threaded socket 13 for attaching the surface treating article 10a to a desired power tool. In a preferred embodiment, the threaded socket 13 fits with a corresponding male threaded back-up pad (not illustrated). A suitable back-up pad is available commercially as a Roloc™ TS Disc Pad from Minnesota Mining and Manufacturing Company, St. Paul, Minnesota.

Figure 4 illustrates a cross-sectional view of the surface treating article 10a. Fastener 12a includes a base 15 and threaded socket 13. The base 15 includes an annular planar surface 14. Similar to the method described above, the fastener 12a is attached to the back surface 44 of the abrasive member 40 by an annulus of adhesive 36. Preferably, the annulus of adhesive is a layer of thermoplastic adhesive. In one preferred embodiment, the annulus of adhesive is a discrete annular sheet of adhesive. By inducing relative rotation between the fastener 12a and the surface conditioning member 40 with an annulus of thermoplastic adhesive between, the friction causes the layer of thermoplastic adhesive to soften and flow in between the fastener 12a and surface conditioning member 40. Upon cooling, the annulus of adhesive 36 forms a bond between the fastener 12a and surface conditioning member 40. Preferably, the annular layer of adhesive is similar in dimensions to the annular planar surface 14. Alternatively, a continuous disc of adhesive may be used to attach fastener 12a to surface treating article 10a, instead of an annulus of adhesive.

Surface treating article 10a is illustrated in Figures 3 and 4 as a coated abrasive member 40. However, surface treating article 10a may include a non-woven abrasive member.

Preferably, fastener 12 is made of a thermoplastic material. Examples of suitable thermoplastic materials include nylon and polyamides. Fastener 12a is preferably made of a metal instead of a thermoplastic material. A suitable metal is steel.

Preferably, the layer of adhesive 24 is a thermoplastic adhesive. The term "thermoplastic" as used herein, including the claims, refers to a material which undergoes a physical change upon the application of heat, i.e., the material flows or softens upon heat and returns to its initial non-flowing state upon cooling. The layer of adhesive may be a thermosettable thermoplastic adhesive, which for the present invention, is a subset of thermoplastic adhesives. The term "thermosettable thermoplastic" as used herein, including the claims, refers to a material, which undergoes a physical change and chemical change upon the application of heat, i.e. the material flows or softens upon heat and returns to its initial non-flowing state upon cooling. Whereas a thermoplastic adhesive may again be heated to allow the adhesive to flow or soften again, a thermosettable thermoplastic adhesive will not flow or soften again under heat. Suitable thermoplastic adhesives include polyamide polymers and copolymers, polyester polymers and copolymers, and ethylene/vinyl acetate copolymers. Such thermoplastic adhesives are available commercially as "Jet-Melt 3738" or "Jet-Melt 3747" from Minnesota Mining and Manufacturing, St. Paul, MN. An example of a suitable thermosettable thermoplastic adhesive is the adhesive taught in U.S. Patent No. 5,368,922, "Prepreg of Thermoplastic Polymer Particles in Liquid Thermosettable Resin," to Portelli et al.

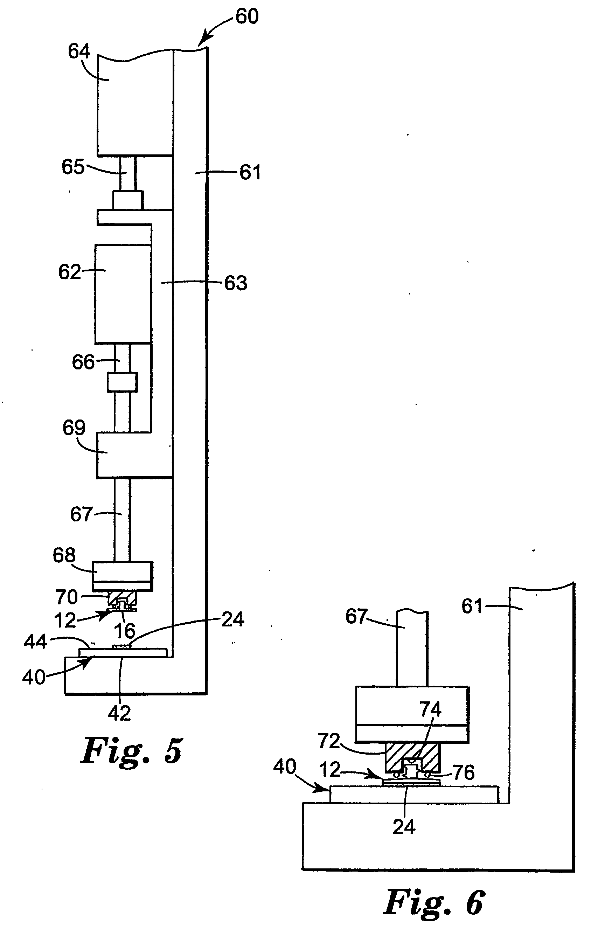

Figure 5 illustrates a spin welding apparatus 60 for inducing relative rotation between the fastener 12 and surface conditioning member 40 with a layer of adhesive between them to form a surface treating article 10. The same apparatus may be used to spin weld fastener 12a to surface conditioning member 40 with an annulus of adhesive between them to form surface treating article 10a. As mentioned above, the layer of adhesive may be a discrete sheet of adhesive, or may be already coated on the back surface 44 of the surface treating article, or coated on the planar surface 14 of the fastener 12. A discrete sheet of adhesive is illustrated in Figures 5 and 6.

Apparatus 60 includes a frame 61 to which a motor 62 and drive mechanism 64 are mounted. In a preferred embodiment, the drive mechanism 64 is an air cylinder. The motor 62 is mounted via a slidable frame 63 to allow the slidable frame 63 and motor 62 to be driven vertically by the rod 65 extending from the air cylinder 64. Rod 65 is attached to the slidable frame 63 so as to raise and lower the slidable frame in response to actuating the cylinder 64. Extending from the motor 62 is a first shaft 66. The first shaft is coupled to a second shaft 67. In the illustrated embodiment, an optional flywheel 68 is mounted to the distal end of the second shaft 67. Also mounted at the distal end of the shaft is a fixture 70 for holding the fastener 12. The second shaft may optionally pass through bearing support 69 that extends from the slidable frame 63. It is thus seen that the motor 62 drives first shaft 66, second shaft 67, optional flywheel 68 and fixture 70; and that all of these components are raised and lowered together with slidable frame 63 in response to actuating the cylinder 64.

Fixture 70 can be any suitable fixture that will hold the fastener 12 during the spin weld operation. Fixture 70 must grip the fastener 12 securely enough to avoid slippage of the fastener 12 within the fixture 70 when the fastener is spun against the layer of adhesive 24 and the surface conditioning member 40. Fixture 70 should also provide for easy release of the fastener 12 after the spin weld process. Fixture 70 thus may include moveable elements for gripping and releasing the fastener 12 as is well known in the art.

In the embodiment illustrated in Figure 6, the fixture 70 includes a fixture body 72 having a cavity 74 therein. The cavity is sized to receive the drive member 18 of the fastener 12. Cavity 74 may optionally be threaded for mating with the threaded drive member 18. Alternatively, cavity 74 may include moveable elements (not illustrated) for gripping and releasing the threaded stud 20. Fixture 70 optionally includes an o-ring 76. O-ring 76 engages with the second surface 16 of the fastener 12. O-ring 76 is particularly preferred when there are no moveable elements in the fixture 70 for grabbing and releasing the drive member 18. This helps eliminate slippage between the fastener 12 and fixture 70 during the spin welding. Alternatively, the face of the fixture 70 which comes into contact with the second surface 16 of the fastener 12 can be rough or textured to minimize slippage between the fixture and the fastener during spin welding. Whatever such arrangement is used, care should be taken so as not to damage the drive member 18 or the fastener 12 during spin welding.

The surface conditioning member 40 may be clamped or otherwise mechanically held to the frame 60 to keep the member 40 from rotating during spin welding. Alternatively, there may be a frictional surface on the frame 60 against which the working surface 42 of the surface conditioning member 40 rests to prevent the member 40 from rotating during spin welding. Any suitable methods for loading the fastener 12 and surface conditioning member 40 before spin welding and unloading after spin welding may be provided for and would not be expected to affect the spin weld itself or the strength of the adhesive bond.

For preferred embodiment of articles described above, a preferred method of spin welding the fastener 12 to the surface conditioning member 40 is as follows. In general, the spin weld method comprises the steps of holding stationary the surface conditioning member 40, mounting the fastener 12 in a suitable fixture 70 to be driven by the spin weld apparatus 60, which is centered generally over the surface conditioning member 40, placing a discrete sheet of thermoplastic adhesive in the approximate center of the surface conditioning member 40, accelerating the fixture 70 and fastener 12 to the desired rotational speed, activating the drive mechanism 64 to move the planar surface 14 of the fastener 12 into contact with sheet of adhesive 24 located between the fastener 12 and surface conditioning member 40, applying sufficient force between the fastener 12 and surface conditioning member 40 while the fastener is spinning to achieve a frictional temperature required to soften the sheet of adhesive 24, allowing the fixture 70 and fastener 12 to stop rotation, maintaining force between the fastener 12 and surface conditioning member 40 while the softened layer of adhesive 24 sufficiently cools to form a bond between the fastener 12 and surface treating article member 40, and releasing the fastener 12 from the fixture 70 and removing the surface conditioning article 10. If the sheet of adhesive is of a smaller diameter compared to the planar surface 14 of fastener 12, and the fastener is made of a thermoplastic material, then the planar surface may also soften and bond with the surface conditioning member 40.

Instead of using a discrete sheet of adhesive, a layer of adhesive 24 may be already incorporated into either the fastener 12 or the surface treating member 40 before inducing relative rotation between the fastener and surface treating member 40. For instance, the planar surface 14 of the fastener 12 may be coated with a layer of adhesive, prior to mounting the fastener 12 to fixture 70. Alternatively, the back surface 44 of the surface conditioning member 40 may be coated with a layer of adhesive, prior to holding the surface conditioning article in the apparatus 60. With either of these alternative methods, it is not necessary to separately align the discrete sheet of adhesive between the fastener 12 and surface conditioning member 40.

Any commercially available spin welding apparatus 60 capable of obtaining the conditions described herein may be used, such as the PMA Spinweld 90 available from Powell, McGee Associates, Inc., of Shoreview, Minnesota. Another suitable apparatus includes an Allen-Bradley servo motor model number 1326AB-B410J-21 or model number 1326AS-B330H-21, with a 1394-AM04 axis module, all available from Allen-Bradley Company; Inc. located in Milwaukee, Wisconsin.

Preferably, the spin weld apparatus is operated in a mode that removes power from the motor 62 after the fastener 12 and surface conditioning member 40 are brought into contact under pressure, allowing the friction between the fastener and member 40 to bring the rotating fastener to a stop. Alternatively, rotation of the fixture 70 and fastener 12 can be resistance stopped.

The parameters found to affect the strength of the melt-bond between the fastener 12 and surface conditioning member 40 are as follows. The force that the cylinder 64 applies to the system is preferably between about 125 and 1131 lb. (10 to 90 psi for a 4 inch diameter cylinder), more preferably between about 251 and 628 lb. (20 to 50 psi), and most preferably between about 314 and 565 lb. (25 to 45 psi). The speed of the motor 62 is preferably from about 2,000 and 10,000 RPM. The spin time is preferably between about 0.15 seconds and 0.90 seconds. The spin time is a measurement of how long the motor 62 is maintained under power from the time the solenoid valve is signaled to apply air pressure for the cylinder to move the fixture 70 and fastener 12 towards the sheet of adhesive 24 and surface conditioning member 40 (a travel distance of from approximately 2 inches to 6 inches), and ends with the command to remove power from the motor 62 after the fastener 12 contacts the sheet of adhesive 24 and surface conditioning member 40. A useful parameter for determining suitable bond strengths is the speed of the motor (RPM) multiplied by the spin time (seconds). It has been determined that this parameter should be above a desired minimum to obtain the desired bond strength. Increasing the parameter beyond the desired minimum shifts the failure mode from release of the melt-bond to breakage of the drive member 18. Therefore, increasing this parameter above the switch-over point of the failure mode does not significantly increase the overall strength of the surface treating article. For fastening the preferred embodiments of the elements described above, it is preferred that (RPM)x(spin time) be between about 200 and 9000.

It has been found that, within a given range of rotation speed and spin time, the cylinder 64 should maintain the fastener 12 in contact with the sheet of adhesive and surface conditioning member 40 with at least a minimum preferred force to obtain a desired melt-bonded force between the layer of adhesive, fastener and the surface conditioning member, and that increasing force shifts the release mode from release of the melt bond to breakage of the drive member. Therefore, increasing the force to beyond the point at witch the release mode switches does not significantly increase the overall strength of the surface treating article. For the preferred embodiments of the fasteners 12, layer of adhesive 24, and surface conditioning members 40 described herein, the compressive force between fastener 12 and surface conditioning 40 is from about 5 pounds to about 90 pounds.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from the scope of the invention. Thus, the scope of the present invention should not be limited to the exact details and structures described herein, but rather by the structures described by the language of the claims.

## Claims

1. A surface treating article, comprising:
a) a surface condidoning member;
b) a fastener including a generally planar surface and a drive member; and
c) a layer of adhesive between said surface conditioning member and said planar surface of said fastener, wherein said layer of adhesive includes rotational orientation.

2. The surface treating article of claim 1,
wherein said planar surface includes a center portion and an outer portion adjacent said center portion; and
wherein said layer of adhesive is bonded more firmly to said surface conditioning member adjacent said outer portion of said planar surface of said fastener than said layer of adhesive adjacent said center portion of said planar surface of said fastener.

3. The surface treating article of claim 1or 2, wherein said surface conditioning member includes a working surface and a back surface opposite said working surface, and wherein said layer of adhesive is between said back surface of said surface conditioning member and said planar surface of said fastener.

4. The surface treating article of claim 3, wherein said layer of adhesive is coated on substantially all of said back surface of said surface conditioning member.

5. The surface treating article of claim 1 or 2, wherein said surface conditioning member is an abrasive member.

6. The surface treating article of claim 5, wherein said working surface comprises a non-woven abrasive.

7. The surface treating article of claim 5, wherein said working surface comprises a coated abrasive.

8. The surface treating article of claim 1 or 2 wherein said fastener comprises a thermoplastic material.

9. The surface treating article of claim 1 or 2, wherein said layer of adhesive comprises a thermoplastic adhesive.

10. The surface treating article of claim 9, wherein said layer of thermoplastic adhesive was heated by inducing relative rotation between said fastener and said surface conditioning member with said layer of thermoplastic adhesive between said planar surface of said fastener and said surface conditioning member.

11. The surface treating article of claim 9, wherein said planar surface allows said adhesive to flow freely between said back surface of said surface conditioning member and said planar surface, wherein said adhesive is in a softened state.

12. A method for attaching a fastener to a surface conditioning member, comprising the steps of:
a) inducing relative rotation between a fastener and a surface conditioning member with a layer of adhesive in contact with a planar surface of the fastener and the surface conditioning member so as to soften the layer of adhesive to form a bond between the fastener and the surface conditioning member; and
b) thereafter stopping the relative rotation between the fastener and the surface treating member.

13. The method of claim 12, wherein the layer of adhesive comprises a sheet of adhesive.

14. The method of claim 12, wherein the layer of adhesive comprises an annulus of adhesive.

15. The method of claim 12 wherein the surface conditioning member comprises an abrasive member.

16. The method of claim 15, wherein the abrasive member comprises a coated abrasive member.

17. The method of claim 15, wherein the working surface comprises a non-woven abrasive member.

18. The method of claim 12, wherein the fastener comprises a thermoplastic material.

19. The method of claim 12, wherein the layer of adhesive comprises a thermoplastic adhesive.

20. The method of claim 12, wherein step a) comprises inducing a relative rotation of from 2,000 to 10,000 RPM.

21. The method of claim 12, wherein step a) comprises applying a compressive force of between 5 and 90 pounds between the fastener and the surface conditioning member.

22. the method of claim 21, wherein step a) causes the planar surface of the fastener to soften and bond with the surface conditioning member.

## Patentansprüche

1. Oberflächenbehandlungsgegenstand, aufweisend:
a) ein Oberflächenbehandlungselement;
b) ein Befestigungselement, aufweisend eine im Allgemeinen ebene Oberfläche und ein Antriebselement; und
c) eine Klebstoffschicht zwischen dem Oberflächenbehandlungselement und der ebenen Oberfläche des Befestigungselements, wobei die Klebstoffschicht eine Drehausrichtung aufweist.

2. Oberflächenbehandlungsgegenstand nach Anspruch 1, wobei die ebene Oberfläche einen mittleren Abschnitt und einen äußeren Abschnitt, der an den mittleren Abschnitt angrenzt, aufweist; und
wobei die Klebstoffschicht mit dem Oberflächenbehandlungselement angrenzend an den äußeren Abschnitt der ebenen Oberfläche des Befestigungselements fester verbunden ist, als die Klebstoffschicht angrenzend an den mittleren Abschnitt der ebenen Oberfläche des Befestigungselements.

3. Oberflächenbehandlungsgegenstand nach Anspruch 1 oder 2, wobei das Oberflächenbehandlungselement eine Arbeitsfläche und eine Rückfläche, die gegenüber der Arbeitsfläche angeordnet ist, aufweist, und wobei die Klebstoffschicht zwischen der Rückfläche des Oberflächenbehandlungselements und der ebenen Oberfläche des Befestigungselements angeordnet ist.

4. Oberflächenbehandlungsgegenstand nach Anspruch 3, wobei die Klebstoffschicht im Wesentlichen auf der gesamten Rückfläche des Oberflächenbehandlungselements aufgetragen ist.

5. Oberflächenbehandlungsgegenstand nach Anspruch 1 oder 2, wobei das Oberflächenbehandlungselement ein abtragendes Element ist.

6. Oberflächenbehandlungsgegenstand nach Anspruch 5, wobei die Arbeitsfläche ein nicht gewebtes Schleifmittel aufweist.

7. Oberflächenbehandlungsgegenstand nach Anspruch 5, wobei die Arbeitsfläche ein beschichtetes Schleifmittel aufweist.

8. Oberflächenbehandlungsgegenstand nach Anspruch 1 oder 2, wobei das Befestigungselement einen thermoplastischen Kunststoff aufweist.

9. Oberflächenbehandlungsgegenstand nach Anspruch 1 oder 2, wobei die Klebstoffschicht einen thermoplastischen Klebstoff aufweist.

10. Oberflächenbehandlungsgegenstand nach Anspruch 9, wobei die Schicht aus thermoplastischem Klebstoff durch Verursachen einer Relativdrehung zwischen dem Befestigungselement und dem Oberflächenbehandlungselement, wobei die Schicht aus thermoplastischem Klebstoff zwischen der ebenen Oberfläche des Befestigungselements und dem Oberflächenbehandlungselement angeordnet war, erwärmt wurde.

11. Oberflächenbehandlungsgegenstand nach Anspruch 9, wobei die ebene Oberfläche ermöglicht, dass der Klebstoff frei zwischen der Rückfläche des Oberflächenbehandlungselements und der ebenen Oberfläche fließt, wobei sich der Klebstoff in einem erweichten Zustand befindet.

12. Verfahren zum Anbringen eines Befestigungselements an einem Oberflächenbehandlungselement, aufweisend die Schritte:
a) Verursachen einer Relativdrehung zwischen einem Befestigungselement und einem Oberflächenbehandlungselement, wobei eine Klebstoffschicht in Kontakt mit einer ebenen Oberfläche des Befestigungselements und dem Oberflächenbehandlungselement ist, wodurch die Klebstoffschicht erweicht wird, um eine Verbindung zwischen dem Befestigungselement und dem Oberflächenbehandlungselement zu bilden; und
b) Anhalten der Relativdrehung zwischen dem Befestigungselement und dem Oberflächenbehandlungselement im Anschluss daran.

13. Verfahren nach Anspruch 12, wobei die Klebstoffschicht eine Klebstofffolie oder -platte aufweist.

14. Verfahren nach Anspruch 12, wobei die Klebstoffschicht einen Klebstoffring aufweist.

15. Verfahren nach Anspruch 12, wobei das Oberflächenbehandlungselement ein abtragendes Element aufweist.

16. Verfahren nach Anspruch 15, wobei das abtragende Element ein beschichtetes abtragendes Element aufweist.

17. Verfahren nach Anspruch 15, wobei die Arbeitsfläche ein nicht gewebtes abtragendes Element aufweist.

18. Verfahren nach Anspruch 12, wobei das Befestigungselement einen thermoplastischen Kunststoff aufweist.

19. Verfahren nach Anspruch 12, wobei die Klebstoffschicht einen thermoplastischen Klebstoff aufweist.

20. Verfahren nach Anspruch 12, wobei Schritt a) das Verursachen einer Relativdrehung mit zwischen 2.000 und 10.000 Umdrehungen pro Minute aufweist.

21. Verfahren nach Anspruch 12, wobei Schritt a) das Ausüben einer Druckkraft von zwischen 5 und 90 Pfund zwischen dem Befestigungselement und dem Oberflächenbehandlungselement aufweist.

22. Verfahren nach Anspruch 21, wobei Schritt a) bewirkt, dass sich die ebene Oberfläche des Befestigungselements erweicht und mit dem Oberflächenbehandlungselement verbindet.

## Revendications

1. Article de traitement de surface, comprenant:
a) un élément de conditionnement de surface;
b) une attache présentant une surface essentiellement plane et un élément de commande; et
c) une couche d'adhésif entre ledit élément de conditionnement de surface et ladite surface plane de ladite attache, dans lequel ladite couche d'adhésif présente une orientation rotative.

2. Article de traitement de surface selon la revendication 1, dans lequel ladite surface plane comprend une partie centrale et une partie extérieure à proximité de ladite partie centrale; et
dans lequel ladite couche d'adhésif est collée plus fermement sur ledit élément de conditionnement de surface à proximité de ladite partie extérieure de ladite surface plane de ladite attache que ladite couche d'adhésif à proximité de ladite partie centrale de ladite surface plane de ladite attache.

3. Article de traitement de surface selon la revendication 1 ou 2, dans lequel ledit élément de conditionnement de surface présente une surface de travail et une surface arrière opposée à ladite surface de travail, et dans lequel ladite couche d'adhésif se trouve entre ladite surface arrière dudit élément de conditionnement de surface et ladite surface plane de ladite attache.

4. Article de traitement de surface selon la revendication 3, dans lequel ladite couche d'adhésif est revêtue sur essentiellement la totalité de ladite surface arrière dudit élément de conditionnement de surface.

5. Article de traitement de surface selon la revendication 1 ou 2, dans lequel ledit élément de conditionnement de surface est un élément abrasif.

6. Article de traitement de surface selon la revendication 5, dans lequel ladite surface de travail comprend un abrasif non tissé.

7. Article de traitement de surface selon la revendication 5, dans lequel ladite surface de travail comprend un abrasif revêtu.

8. Article de traitement de surface selon la revendication 1 ou 2, dans lequel ladite attache comprend une matière thermoplastique.

9. Article de traitement de surface selon la revendication 1 ou 2, dans lequel ladite couche d'adhésif comprend un adhésif thermoplastique.

10. Article de traitement de surface selon la revendication 9, dans lequel ladite couche d'adhésif thermoplastique a été chauffée en induisant une rotation relative entre ladite attache et ledit élément de conditionnement de surface avec ladite couche d'adhésif thermoplastique entre ladite surface plane de ladite attache et ledit élément de conditionnement de surface.

11. Article de traitement de surface selon la revendication 9, dans lequel ladite surface plane permet audit adhésif de s'écouler librement entre ladite surface arrière dudit élément de conditionnement de surface et ladite surface plane, dans lequel ledit adhésif se trouve dans un état ramolli.

12. Procédé pour fixer une attache à un élément de conditionnement de surface, comprenant les étapes consistant à:
a) induire une rotation relative entre une attache et un élément de conditionnement de surface avec une couche d'adhésif en contact avec une surface plane de l'attache et l'élément de conditionnement de surface de manière à ramollir la couche d'adhésif en vue de former une liaison entre l'attache et l'élément de conditionnement de surface; et
b) arrêter ensuite la rotation relative entre l'attache et l'élément de conditionnement de surface.

13. Procédé selon la revendication 12, dans lequel la couche d'adhésif comprend une feuille d'adhésif.

14. Procédé selon la revendication 12, dans lequel la couche d'adhésif comprend un anneau d'adhésif.

15. Procédé selon la revendication 12, dans lequel l'élément de conditionnement de surface comprend un élément abrasif.

16. Procédé selon la revendication 15, dans lequel l'élément abrasif comprend un élément abrasif revêtu.

17. Procédé selon la revendication 15, dans lequel la surface de travail comprend un élément abrasif non tissé.

18. Procédé selon la revendication 12, dans lequel l'attache comprend une matière thermoplastique.

19. Procédé selon la revendication 12, dans lequel la couche d'adhésif comprend un adhésif thermoplastique.

20. Procédé selon la revendication 12, dans lequel l'étape a) comprend l'induction d'une rotation relative comprise entre 2000 et 10000 tpm.

21. Procédé selon la revendication 12, dans lequel l'étape a) comprend l'application d'une force de compression comprise entre 5 et 90 livres entre l'attache et l'élément de conditionnement de surface.

22. Procédé selon la revendication 21, dans lequel l'étape a) entraîne la surface plane de l'attache à se ramollir et à se coller avec l'élément de conditionnement de surface.
